(19) Europäisches Patentamt

European Patent Office

Office européen des brevets

(11) EP 0 807 030 B1

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(21) Anmeldenummer: 96902931.3

(22) Anmeldetag: 27.01.1996

(51) Int. Cl.$^6$: **B60K 7/00**, B60K 17/04

(86) Internationale Anmeldenummer:
**PCT/EP96/00331**

(87) Internationale Veröffentlichungsnummer:
**WO 96/23670 (08.08.1996 Gazette 1996/36)**

(54) **ANTRIEBSVORRICHTUNG, INSBESONDERE RADANTRIEB FÜR KETTENFAHRZEUGE**

DRIVE DEVICE, IN PARTICULAR A WHEEL DRIVE FOR TRACKED VEHICLES

DISPOSITIF D'ENTRAINEMENT, EN PARTICULIER DES BARBOTINS DE VEHICULES CHENILLES

(84) Benannte Vertragsstaaten:
**AT BE DE FR GB IT**

(30) Priorität: **03.02.1995 DE 19503477**

(43) Veröffentlichungstag der Anmeldung:
**19.11.1997 Patentblatt 1997/47**

(73) Patentinhaber:
**ZF FRIEDRICHSHAFEN Aktiengesellschaft
88038 Friedrichshafen (DE)**

(72) Erfinder: **MANN, Egon
D-88045 Friedrichshafen (DE)**

(56) Entgegenhaltungen:
**EP-A- 0 505 727          DE-A- 2 149 112
DE-A- 4 206 086          US-A- 4 271 725
US-A- 4 649 772**

**Beschreibung**

Die Erfindung bezieht sich auf eine Antriebsvorrichtung für Arbeitsmaschinen, insbesondere für Kettenfahrzeuge, wie z. B. Planierraupen oder dergleichen.

Dem Stand der Technik sind vielfältige Ausgestaltungen eines Turasantriebes als bekannt zu entnehmen. Bei diesen Antriebsvorrichtungen treibt ein Hydraulikmotor über ein Planetengetriebe ein Kettenrad an. Die Antriebsvorrichtung soll, insbesondere in axialer Richtung, geringe Abmessungen aufweisen, so daß sie nicht über die Breite einer Gleiskette, z. B. eines Raupenbaggers, hinausragt. Das Planetengetriebe muß eine ausreichend große Übersetzung aufweisen, damit ein niedriges Drehzahlniveau am Kettenrad erreicht wird. Die Antriebsvorrichtung muß mit einer Bremse versehen sein, damit bei Stillstand des Hydraulikmotors der Abtrieb festgebremst wird. Da die Antriebsvorrichtung auch unter extremen äußeren Bedingungen eingesetzt wird, muß für eine Zuverlässige Abdichtung bei einer hohen Lebensdauer gesorgt werden. Schließlich soll die Antriebsvorrichtung montage- und wartungsfreundlich sein. Im Hinblick auf die Herstellkosten muß die Anzahl der Bauteile der Antriebsvorrichtung möglichst klein sein.

Mit den bekannten Antriebsvorrichtungen sind die vorstehend erwähnten Forderungen nicht zu erfüllen. Wenn der Hydraulikmotor beispielsweise als Axialkolbenmaschine in Schrägscheibenbauweise ausgebildet ist, ist eine axial kurze Bauweise nur dann zu erreichen, wenn diese Axialkolbenmaschine in den Nabenträger integriert wird. Beispiele hierzu finden sich in der DE-A 27 44 936, DE-A 28 31 458 und der DE-A 42 35 697. In der Regel liegen die Drehzahlen des Hydraulikmotors so hoch, daß ein mehrstufiges Planetengetriebe verwendet werden muß. Diese Mehrstufigkeit erhöht zumeist die axiale Baulänge der Antriebsvorrichtung, so daß der mit der Integration des Hydraulikmotors in den Nabenträger erreichte Vorteil zumindest teilweise wieder aufgezehrt wird. Ein im Nabenträger integrierter Hydraulikmotor hat zur Folge, daß für die Lagerung der Nabe auf dem Nabenträger groß dimensionierte Lager verwendet werden müssen. Zu diesem Nachteil tritt ein weiterer hinzu: Da die Nahe gegenüber dem Nabenträger abgedichtet werden muß, sind Dichtungen mit ebenfalls großen Durchmessern erforderlich. Diese Umstände wirken kostensteigernd. Durch die relativ hohen Umfangsgeschwindigkeiten leidet ferner die Lebensdauer der Dichtung.

Aus der US-A 4,271,725 ist ferner ein Radantrieb für Arbeitsmaschinen, insbesondere für Kettenfahrzeuge, bekannt, welcher aus einem Hydraulikmotor, nämlich einem Axialkolbenmotor in Schrägscheibenbauweise, besteht. Dieser treibt über eine Antriebswelle ein inneres Zentralrad eines mehrstufigen Planetengetriebes an, dessen Abtriebsglied mit einer Nabe, die auf einem stationär angeordneten Nabenträger gelagert ist, drehfest verbunden ist. Der Hydraulikmotor ist dabei, in Fahrzeuglängsrichtung gesehen, auf einer Seite des Nabenträgers angeflanscht, während auf der anderen Seite des Nabenträgers das mehrstufige Planetengetriebe und die Nahe angeordnet sind.

Obwohl Radialkolbenmotoren dem Fachmann schon lange bekannt sind (vergleiche beispielsweise die DE-A 15 28 519 sowie die DE-A 22 55 239), werden sie bis heute in Kombination mit einer Bremse und einem Planetengetriebe nicht als Turasantriebe für Kettenfahrzeuge eingesetzt.

Der vorliegenden Erfindung liegt die Aufgabe zugrunde, eine Antriebsvorrichtung für den Einsatz in Kettenfahrzeugen zu schaffen, die sich insbesondere durch eine in der Herstellung preiswerte, kompakte sowie montage-, wartungsfreundliche und zuverlässige Bauweise auszeichnet.

Die der Erfindung zugrunde liegende Aufgabe wird durch eine Antriebsvorrichtung gelöst, die die Merkmale des Hauptanspruches aufweist.

Gegenüber den bekannten Turasantrieben überrascht die erfindungsgemäße Lösung durch eine außerordentlich einfache Bauweise. Der langsam laufende Radialkolbenmotor arbeitet auf einem Drehzahlniveau, der ein mehrstufiges Planetengetriebe nicht mehr erforderlich macht. Der Radiakolbenmotor ist daher mit einem einstufigen Planetengetriebe verbunden. Zudem besteht dieser Motor systembedingt aus relativ wenigen Bauteilen. Er baut in Axialrichtung kompakt, so daß er auf einer Seite des Nabenträgers direkt angeflanscht werden kann. Eine Antriebswelle verbindet den Zylinderblock des Radialkolbenmotors mit dem Planetengetriebe, dessen Abtriebsglied mit der Nabe drehfest verbunden ist.

Vorteilhafte Ausgestaltungen der erfindungsgemäßen Antriebsvorrichtung sind den Ansprüchen 2 bis 5 zu entnehmen.

Weitere, für die Erfindung wesentliche Merkmale sowie die hieraus resultierenden Vorteile sind der nachfolgenden Erläuterung zweier Ausführungsbeispiele zu entnehmen. Es zeigen:

Fig. 1    eine erste Ausführungsform einer Antriebsvorrichtung in vereinfachter Darstellung, insbesondere für ein Kettenfahrzeug, und

Fig. 2    eine weitere Ausführungsform, die insbesondere in der Gestaltung des Endabtriebs gegenüber der Anordnung nach Fig. 1 abweicht.

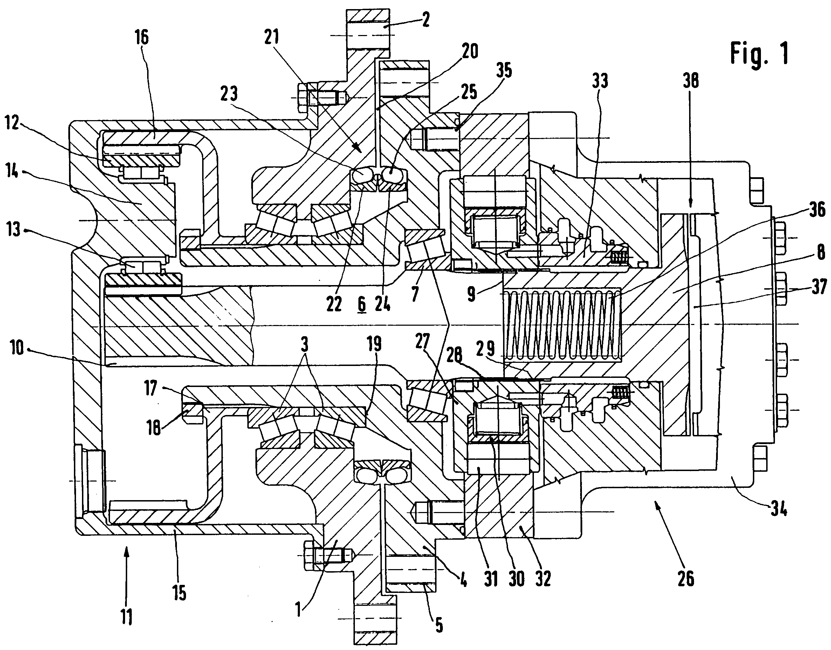

Die in Fig. 1 im Längsschnitt und in vereinfachter Darstellung wiedergegebene Antriebsvorrichtung ist insbesondere für den Antrieb eines Kettenrades eines Kettenfahrzeuges, z. B. einer Planierraupe oder dergleichen, geeignet. Es handelt sich um eine Antriebsvorrichtung, die auch unter der Bezeichnung Turasantrieb geläufig ist.

Ein selbst nicht abgebildetes Kettenrad ist drehfest mit einer rotierend angeordneten Nabe 1 verbunden. Für die drehfeste Verbindung weist die Nabe 1 an ihrem Umfang eine Vielzahl von Gewindebohrungen 2 auf, die ebenfalls nicht gezeigte Schraubenbolzen des Kettenrades aufnehmen.

Die Nabe 1 ist über zwei Kegelrollenlager 3 auf einem stationären Nabenträger 4 drehbar angeordnet. Die Kegelrollenlager sind in O-Anordnung montiert. Der Nabenträger 4 ist mit dem Fahrzeugrahmen fest verbunden, was im einzelnen der Zeichnung nicht zu entnehmen, jedoch dem Fachmann geläufig ist. Für die feste Verbindung des Nabenträgers 4 mit dem Fahrzeugrahmen sind ebenfalls mehrere Gewindebohrungen 5 am Umfang des Nabenträgers 4 verteilt angeordnet.

Im stationär angeordneten Nabenträger 4 ist eine Antriebswelle 6 über ein einziges Lager, insbesondere ein Kegelrollenlager 7, drehbar gelagert. An die Antriebswelle 6 schließt sich eine Verbindungswelle 8 an. Mit der Bezugsziffer 9 ist die Trennstelle zwischen der Antriebswelle 6 und der Verbindungswelle 8 gekennzeichnet.

Die einseitig fliegend gelagerte Antriebswelle 6 ist an ihrem freien Ende - in der Zeichnung links liegend - mit einem inneren Zentralrad 10 (Sonne) eines Planetengetriebes 11 drehfest verbunden. Das innere Zentralrad 10 kann, wie im vorliegenden Fall, einstückig mit der Antriebswelle 6 gefertigt sein. Das innere Zentralrad 10 steht in ständigem Zahneingriff mit Planetenrädern 12, von denen eines abgebildet ist. Die Planetenräder 12 sind über Wälzlager 13 auf einem Steg 14 des Planetengetriebes 11 drehbar gelagert. Der Steg 14 ist zudem Bestandteil eines Endabtriebsgehäuses 15, das mit der Nabe 1 dicht und fest verschraubt ist und welches das Planetengetriebe 11 umschließt.

Die Planetenräder 12 stehen ferner in ständigem Zahneingriff mit einem stationären äußeren Zentralrad 16 (Hohlrad) des Planetengetriebes 11. Das äußere Zentralrad 16 ist auf den Nabenträger 4 im Bereich eines Profiles 17 drehfest aufgeschoben und in Axialrichtung durch eine Mutter 18 über die Kegelrollenlager 3 gegen eine Schulter des Nabenträgers 4 gekontert.

Da die Nabe 1 gegenüber dem stationären Nabenträger 4 rotiert, stellt sich zwischen diesen Bauteilen ein radialer Spalt 20 ein. Da das Endabtriebsgehäuse 15 zumindest teilweise mit Schmier- und Kühlöl befüllt ist, muß eine geeignete Dichtung vorhanden sein, die das Kühl- und Schmieröl zurückhält bzw. die den Innenraum des Endabtriebsgehäuses vor äußeren Einflüssen schützt. Diese Aufgaben übernimmt eine Gleitringdichtung 21. Diese Gleitringdichtung 21 bekannter Bauart besteht aus einem rotierenden Gleitring 22 und einem in eine Ausdrehung der Nabe 1 eingesetzten ersten Dichtring 23 sowie einem stationären Gegenring 24 und einem in eine Ausnehmung des Nabenträgers 4 eingelegten zweiten Dichtring 25. Aus der Zeichnung geht hervor, daß die Gleitringdichtung 21 einen wirksamen Durchmesser aufweist, der nur geringfügig größer ist als der Außendurchmesser der Kegelrollenlager 3.

Die Antriebsvorrichtung wird durch einen Hydraulikmotor 26 vervollständigt. Für die Antriebsvorrichtung ist wesentlich, daß dieser Hydraulikmotor aus einem langsam laufenden Radialkolbenmotor besteht. Das Schluckvolumen des Radialkolbenmotors beträgt etwa 1 180 cm$^3$. Die maximale Drehzahl liegt bei ca. 310 1/min. Der Hydraulikmotor ist schaltbar, wobei das Verhältnis der Schluckvolumina $q_{min}/q_{max} = 0,33/0,50/0,66$ sein kann. Die Bremsventile befinden sich am Hydraulikmotor. Der Hydraulikkreislauf ist offen.

Ein Zylinderblock 27 ist über ein Mitnahmeprofil 28 drehfest mit der Antriebswelle 6 verbunden. Analog hierzu besteht über ein geometrisch gleich ausgebildetes Mitnahmeprofil 29 eine drehfeste Verbindung zwischen dem Zylinderblock 27 und der Verbindungswelle 8.

In bekannter Weise sind im Zylinderblock 27 mehrere Kolben 30 radial beweglich gelagert. Diese stützen sich über Rollen 31 an einer stationären Nockenbahn 32 ab. Über einen Verteiler 33 erfolgt die Zu- bzw. Abfuhr der Hydraulikflüssigkeit. Ein Gehäuse 26 umschließt den Radialkolbenmotor und ist, ebenso wie die Nockenbahn 32, mit dem Nabenträger 4 verschraubt. Hierzu sind im Nabenträger 4 mehrere Gewindebohrungen 35 vorgesehen.

Die Verbindungswelle 8 ist axial verschieblich angeordnet. Sie steht einerseits unter der Wirkung einer Druckfeder 36 und andererseits wirkt auf sie eine Kraft, die von einem Druck abhängig ist, der in einem Druckraum 37 herrscht. In der gezeichneten (linken) Endlage der Verbindungswelle 8 ist der im Druckraum 37 herrschende Druck hoch, so daß eine Formschlußbremse 38 geöffnet ist. Im anderen Fall ist diese Formschlußbremse 38 durch die Kraft der Druckfeder 36 geschlossen. Die Formschlußbremse 38 wirkt als Feststellbremse bei Stillstand des Fahrzeuges.

Der erläuterte Turasantrieb mit einem langsam laufenden Radialkolbenmotor und einem einstufigen Planetengetriebe ermöglicht den Antrieb eines Kettenrades bei einer höchstmöglichen Übersetzung. Der Turasantrieb baut hinsichtlich des Raumbedarfes - bezogen auf den Nabenträger 4 - etwa symmetrisch. Dies bedeutet, daß auf der einen Seite der Hydraulikmotor 26 angeflanscht und auf der anderen Seite die Nabe 1 mitsamt dem Planetengetriebe 11 drehantreibbar angeordnet ist. Die Antriebswelle 6 bildet die triebliche Verbindung zwischen dem Radialkolbenmotor und dem Planetengetriebe 11. Ein wesentlicher Vorteil dieser Verbindung besteht darin, daß die Durchmesser der Antriebswelle 6 und des Nabenträgers 4 im Bereich dieser Verbindung klein gehalten werden können. Hieraus resultiert, daß die Durchmesser der Kegelrollenlager 3 ebenfalls klein sind. Demzufolge sind auch die radialen Abmessungen der Gleitringdichtung 21 klein. Da die Umfangsgeschwindigkeiten wegen der herrschenden Durchmesserverhältnisse und des relativ niedrigen Drehzahlniveaus ebenfalls relativ niedrig sind, ergibt sich eine zuverlässige Abdichtung bei einer hohen Lebensdauer. Zudem baut die Antriebsvorrichtung kompakt und zeichnet sich zusätzlich durch große Laufruhe aus. Das Planetengetriebe kann mit gerad- oder schrägverzahnten Zahnrädern arbeiten.

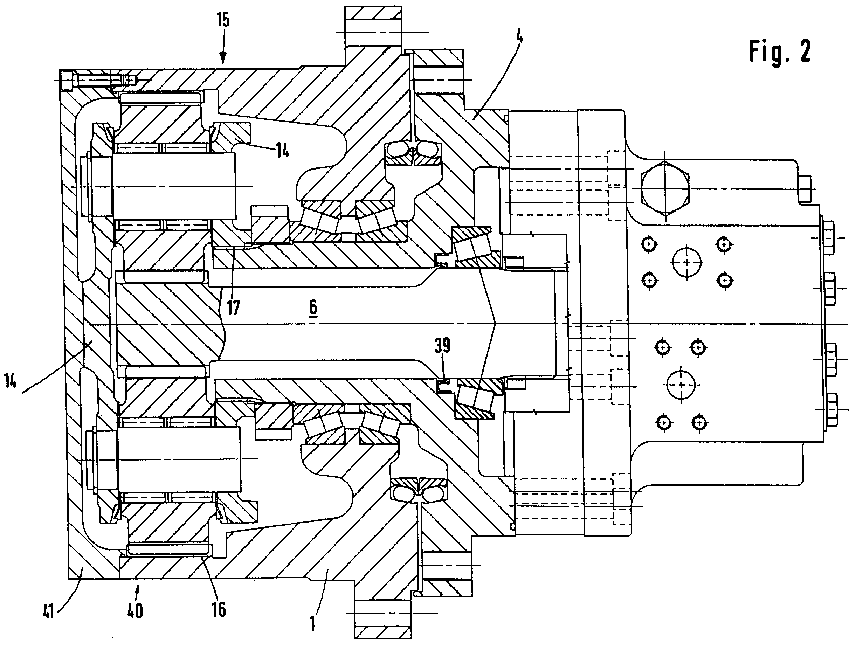

Der in Fig. 2 ebenfalls in vereinfachter Darstellung wiedergegebene Längsschnitt eines Turasantriebes weist prinzipielle Gemeinsamheiten zur Antriebsvorrichtung nach Fig. 1 auf. Gleiche Bauteile sind daher mit gleichen Bezugsziffern versehen.

Wenn mit getrennten Ölhaushalten gearbeitet werden soll, kann auf der Antriebswelle 6 eine zusätzliche Dichtung 39, beispielsweise ein Radialwellendichtring, laufen. Gegenüber dem oben erläuterten Ausführungsbeispiel besteht ein wesentlicher Unterschied darin, daß der Steg 14 des Planetengetriebes 40 über das Profil 17 drehfest mit dem Nabenträger 4 verbunden ist. Demzufolge ist bei dieser Antriebsvorrichtung der Steg 14 kein Bestandteil des Endabtriebsgehäuses 15. Vielmehr ist das äußere Zentralrad 16 als Abtriebsglied des Planetengetriebes 40 Bestandteil der Nabe 1. Das Endabtriebsgehäuse 15 wird demnach durch die Nabe 1 und einen zusätzlichen Deckel 41 gebildet. Diese abgewandelte Ausführungsform kann insbesondere dann mit Vorteil eingesetzt werden, wenn das abtriebsseitige Drehzahlniveau so niedrig liegt, daß auf die maximal mögliche Übersetzung (wie bei dem Ausführungsbeispiel nach Fig. 1) verzichtet werden kann.

Bezugszeichen

| | |
|---|---|
| 1 | Nabe |
| 2 | Gewindebohrung |
| 3 | Kegelrollenlager |
| 4 | Nabenträger |
| 5 | Gewindebohrung |
| 6 | Antriebswelle |
| 7 | Kegelrollenlager |
| 8 | Verbindungswelle |
| 9 | Trennstelle |
| 10 | inneres Zentralrad |
| 11 | Planetengetriebe |
| 12 | Planetenrad |
| 13 | Wälzlager |
| 14 | Steg |
| 15 | Endabtriebsgehäuse |
| 16 | äußeres Zentralrad |
| 17 | Profil |
| 18 | Mutter |
| 19 | Schulter |
| 20 | Spalt |
| 21 | Gleitringdichtung |
| 22 | rotierender Gleitring |
| 23 | Dichtring |
| 24 | stationärer Gegenring |
| 25 | Dichtring |
| 26 | Hydraulikmotor |
| 27 | Zylinderblock |
| 28 | Mitnahmeprofil |
| 29 | Mitnahmeprofil |
| 30 | Kolben |
| 31 | Rolle |
| 32 | Nockenbahn |
| 33 | Verteiler |
| 34 | Gehäuse |
| 35 | Gewindebohrung |
| 36 | Druckfeder |
| 37 | Druckraum |
| 38 | Formschlußbremse |
| 39 | Dichtung |
| 40 | Planetengetriebe |
| 41 | Deckel |

**Patentansprüche**

1. Radantrieb für Arbeitsmaschinen, insbesondere für Kettenfahrzeuge, bestehend aus einem Hydraulikmotor (26), der über eine Antriebswelle (6) ein inneres Zentralrad (10) eines Planetengetriebes (11, 40) antreibt und dessen Abtriebsglied, das beispielsweise durch einen Steg (14) oder ein äußeres Zentralrad (16) gebildet ist, mit einer Nabe (1), die auf einem stationär angeordneten Nabenträger (4) gelagert ist, drehfest verbunden ist und, gesehen in Fahrzeuglängsrichtung, der Hydraulikmotor (26) auf einer Seite des Nabenträgers (4) angeflanscht ist, während auf der anderen Seite des Nabenträgers (4) das Planetengetriebe (11, 40) und die Nabe (1) angeordnet sind und daß Zwischen dem Nabenträger (4) und der Nabe (1) eine Gleitringdichtung (21) angeordnet ist, dadurch **gekennzeichnet,** daß die Antriebswelle (6) im Nabenträger (4) fliegend gelagert und der Hydraulikmotor (26) als langsam laufender Radialkolbenmotor und das Planetengetriebe (11, 40) einstufig ausgebildet ist.

2. Antriebsvorrichtung nach Anspruch 1, dadurch **gekennzeichnet,** daß das äußere Zentralrad (16) drehfest mit dem Nabenträger (4) verbunden ist und das Abtriebsglied durch den Steg (14) des Planetengetriebes (11) gebildet wird, der über ein Endabtriebsgehäuse (15) mit der Nabe (1) fest verbunden ist.

3. Antriebsvorrichtung nach Anspruch 1, dadurch **gekennzeichnet,** daß der Steg (14) des Planetengetriebes (40) drehfest mit dem Nabenträger (4) verbunden ist, während das Abtriebsglied durch das mit der Nabe (1) drehfest verbundene äußere Zentralrad (16) gebildet wird.

**4.** Antriebsvorrichtung nach Anspruch 1, dadurch **gekennzeichnet,** daß die Gleitringdichtung (21) aus einem rotierenden Gleitring (22) und einem in eine Ausdrehung der Nabe (1) eingesetzten ersten Dichtring (23) sowie einem stationären Gegenring (24) und einem in eine Ausnehmung des Nabenträgers (4) eingelegten zweiten Dichtring (25) besteht.

**5.** Antriebsvorrichtung nach Anspruch 1, dadurch **gekennzeichnet,** daß dem Hydraulikmotor (26) eine Formschlußbremse (38) zugeordnet ist.

## Claims

**1.** Wheel drive for working machines, in particular for tracked vehicles, consisting of a hydraulic motor (26) which drives an inner central wheel (10) of a planetary gear unit (11, 40) via a drive shaft (6) and whose output member, which is formed, for example, by an arm (14) or an outer central wheel (16), is non-rotatably connected to a hub (1) mounted on a stationary hub carrier (4), and, viewed in the longitudinal direction of the vehicle, the hydraulic motor (26) is flange-mounted on one side of the hub carrier (4), while the planetary gear unit (11, 40) and the hub (1) are disposed on the other side of the hub carrier (4), and that a slide ring seal (21) is disposed between the hub carrier (4) and the hub (1), characterised in that the drive shaft (6) is mounted in cantilever fashion in the hub carrier (4), and the hydraulic motor (26) is in the form of a slow-running radial piston motor and the planetary gear unit (11, 40) is of single-stage construction.

**2.** Drive device according to claim 1, characterised in that the outer central wheel (16) is non-rotatably connected to the hub carrier (4), and the output member is formed by the arm (14) of the planetary gear unit (11), which arm is rigidly connected to the hub (1) via an end output housing (15).

**3.** Drive device according to claim 1, characterised in that the arm (14) of the planetary gear system (40) is non-rotatably connected to the hub carrier (4), while the output member is formed by the outer central wheel (16) non-rotatably connected to the hub (1).

**4.** Drive device according to claim 1, characterised in that the slide ring seal (21) consists of a rotating slide ring (22) and a first sealing ring (23), which is inserted in a bore in the hub (1), as well as of a stationary counter ring (24) and a second sealing ring (25), which is placed in a recess in the hub carrier (4).

**5.** Drive device according to claim 1, characterised in that a positive-locking brake (38) is associated with the hydraulic motor (26).

## Revendications

**1.** Entraînement de roue pour engins de chantier, notamment pour véhicules à chenilles, composé d'un moteur hydraulique (26) qui entraîne, par l'intermédiaire d'un arbre d'entraînement (6), une roue centrale intérieure (10) d'un engrenage planétaire (11, 40), et dont l'élément de sortie formé, par exemple, par une traverse (14) ou par une roue centrale extérieure (16) est relié de façon non rotative à un moyeu (1) logé sur un support de moyeu (4) à position stationnaire sur un côté duquel, vu dans le sens longitudinal du véhicule, le moteur hydraulique (26) est fixé par brides, tandis que sur l'autre côté du support de moyeu (4) sont montés l'engrenage planétaire (11, 40) et le moyeu (1), une garniture étanche à anneau glissant (21) étant agencée entre le support de moyeu (4) et le moyeu (1), **caractérisé** en ce que l'arbre menant (6) est monté flottant dans le support de moyeu (4), et en ce que le moteur hydraulique (26) est conçu comme un moteur à pistons radiaux à vitesse lente et l'engrenage planétaire (11, 40) est à un seul palier.

**2.** Mécanisme d'entraînement selon la revendication 1, **caractérisé** en ce que la roue centrale extérieure (16) est reliée de façon non rotative au support de moyeu (4), et en ce que l'élément de sortie est formé par la traverse (14) de l'engrenage planétaire (11) qui, par l'intermédiaire d'un carter d'arbre secondaire final (15), est reliée de façon fixe au moyeu (1).

**3.** Mécanisme d'entraînement selon la revendication 1, **caractérisé** en ce que la traverse (14) de l'engrenage planétaire (40) est reliée de façon non rotative au support de moyeu (4), tandis que l'élément de sortie est formé par la roue centrale externe (16) reliée de façon non rotative au moyeu (1)

**4.** Mécanisme d'entraînement selon la revendication 1, **caractérisé** en ce que la garniture étanche à anneau glissant (21) se compose d'un anneau glissant rotatif (22) et d'un premier joint d'étanchéité (23) inséré dans un creux alésé du moyeu (1) ainsi que d'un anneau opposé stationnaire (24) et d'un deuxième joint d'étanchéité (25) installé dans un creux du support de moyeu (4)

**5.** Mécanisme d'entraînement selon la revendication 1, **caractérisé** en ce qu'un frein à fermeture géométrique (38) est associé au moteur hydraulique (26).

Fig. 1

Fig. 2